# EUROPÄISCHE PATENTSCHRIFT

(11) **EP 4 336 148 B1**
(45) Veröffentlichungstag und Bekanntmachung des Hinweises auf die Patenterteilung: **10.07.2024**
(21) Anmeldenummer: 22194068.7
(22) Anmeldetag: 06.09.2022
(51) Int. Cl.: G01D 5/20

(54) **ABTASTELEMENT UND INDUKTIVE POSITIONSMESSEINRICHTUNG MIT DIESEM ABTASTELEMENT**
SCANNING ELEMENT AND INDUCTIVE POSITION MEASURING DEVICE COMPRISING SAID SCANNING ELEMENT
ÉLÉMENT DE BALAYAGE ET DISPOSITIF DE MESURE DE POSITION INDUCTIF COMPRENANT LEDIT ÉLÉMENT DE BALAYAGE

(43) Veröffentlichungstag der Anmeldung: 13.03.2024
(73) Patentinhaber: Dr. Johannes Heidenhain GmbH, 83301 Traunreut (DE)
(72) Erfinder: STERKEL, Martin, 83209 Prien am Chiemsee (DE); GÖHRE, Jens-Martin, 83362 Surberg (DE); HUBNER, Tobias, 83355 Grabenstätt (DE); STRASSER, Erich, 83308 Trostberg (DE); EDER, Herbert, 83373 Taching am See (DE); HOLLSTEIN, Kai, 83301 Traunreut (DE); ENTHOLZNER, Dominik, 84367 Waldburgkirchen (DE); JANUSZEWSKI, Karin, 83278 Traunstein (DE); SIEGEL, Robert, 83301 Traunreut (DE)

(56) Entgegenhaltungen:
- DE-A1- 102017 219 931
- DE-A1- 102018 220 671
- DE-A1- 102019 219 764
- DE-A1- 102021 210 280
- DE-A1- 102021 210 910

## Beschreibung

### GEBIET DER TECHNIK

Die Erfindung betrifft ein Abtastelement für eine induktive Positionsmesseinrichtung gemäß dem Anspruch 1 zur Bestimmung einer relativen Position zwischen einem Skalenelement und dem Abtastelement sowie eine Positionsmesseinrichtung mit einem derartigen Abtastelement.

Induktive Positionsmesseinrichtungen werden beispielsweise als Winkelmessgeräte zur Bestimmung der Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches als Rotor des Winkelmessgeräts dient. Wenn an den Erregerleiterbahnen der Erregerspur ein zeitlich wechselnder elektrischer Erregerstrom angelegt wird, werden in Empfängerleiterbahnen der Empfängerspur während der Relativdrehung zwischen Rotor und Stator von der Winkelposition abhängige Signale erzeugt. Diese Signale werden dann in einer Auswerteelektronik weiterverarbeitet.

Häufig werden derartige induktive Positionsmesseinrichtungen als Messgeräte für elektrische Antriebe, zur Bestimmung der Relativbewegung beziehungsweise der Relativlage von entsprechenden Maschinenteilen eingesetzt. In diesem Fall werden die erzeugten Winkelpositionswerte einer Folgeelektronik zur Ansteuerung der Antriebe über eine entsprechende Schnittstellenanordnung zugeführt.

Ferner werden induktive Positionsmesseinrichtungen häufig auch zur direkten Messung von Längsverschiebungen entlang einer Achse verwendet. Dabei wird das gleiche Messprinzip angewendet wie bei den oben genannten Winkelmessgeräten, allerdings verlaufen dann die Empfängerspulen und die Teilungsstruktur entlang der geradlinigen Achse.

### STAND DER TECHNIK

Aus der EP 3 702 737 A1 der Anmelderin ist eine induktive Winkelmesseinrichtung bekannt, welche ein Substrat aus einem Metallwerkstoff aufweist.

In den Offenlegungsschriften DE 10 2021 210 280 A1 und DE 10 2021 210 910 A1 der Anmelderin wird ein Abtastelement für eine induktive Positionsmesseinrichtung beschrieben, welches als eine mehrlagige Leiterplatte umfasst. Diese Leiterplatte umfasst zwei Abschirmschichten, die dazu dienen, bei beidseitig angeordneten Detektoreinheiten ein Übersprechen von Signalen zwischen den Detektoreinheiten zu verhindern, wobei dennoch eine negative Beeinflussung der beiden Detektoreinheiten im Hinblick auf die Messgenauigkeit, insbesondere durch eine unzulässig große Dämpfung der Erregerfelder durch die beiden Abschirmschichten, weitgehend verhindert werden kann.

Die Offenlegungsschrift DE 10 2017 219 931 A1 der Anmelderin offenbart ein Abtastelement, das ein Substrat aus einem Metallwerkstoff aufweist, welches mit dem Erdpotenzial elektrisch verbunden ist.

Schließlich wird in der DE 10 2018 220 671 A1 der Anmelderin ein Multiturn-Drehgeber beschrieben, der auf einem induktiven Messprinzip beruht und einen Metallkörper umfasst, welcher eine elektrische Verbindung mit einem Schirm eines Anschlusskabels aufweist.

### ZUSAMMENFASSUNG DER ERFINDUNG

Der Erfindung liegt die Aufgabe zugrunde ein vergleichsweise genau arbeitendes und kostengünstig herstellbares Abtastelement für eine induktive Positionsmesseinrichtung zu schaffen.

Diese Aufgabe wird erfindungsgemäß durch die Merkmale des Anspruches 1 gelöst.

Das Abtastelement, welches für eine induktive Positionsmesseinrichtung zur Messung einer Position entlang einer Messrichtung geeignet und bestimmt ist, umfasst zumindest eine Erregerspur und zumindest eine Empfängerspur. Die Erregerspur kann eine oder mehrere Erregerleiterbahnen umfassen und die Empfängerspur kann insbesondere eine erste Empfängerleiterbahn und optional eine zweite Empfängerleiterbahn umfassen. Weiterhin weist das Abtastelement ein Substrat auf, das aus einem metallischen Werkstoff hergestellt ist. Zudem umfasst das Abtastelement einen Schirmschichtaufbau, der zumindest eine dielektrische erste Schicht und eine elektrisch leitfähige zweite Schicht umfasst. Der Schirmschichtaufbau ist - bezogen auf eine Richtung senkrecht zur Messrichtung - zwischen dem Substrat und der zumindest einen Empfängerspur angeordnet. Alternativ oder ergänzend ist der Schirmschichtaufbau zwischen dem Substrat und der zumindest einen Erregerspur angeordnet.

Die Messrichtung kann eine lineare Richtung oder eine Umfangsrichtung beziehungsweise eine Tangentialrichtung sein. Die Erregerspur und die Empfängerspur verlaufen insbesondere entlang der Messrichtung.

In weiterer Ausgestaltung der Erfindung weist die erste Schicht eine Dicke von weniger als 1 mm, insbesondere weniger als 0,50 mm, vorteilhafterweise weniger als 0,10 mm auf.

Mit Vorteil ist die elektrisch leitfähige zweite Schicht des Schirmschichtaufbaus durch eine physikalische Gasphasenabscheidung, insbesondere auf der dielektrischen ersten Schicht des Schirmschichtaufbaus, aufgebracht.

Vorteilhafterweise weist der Schirmschichtaufbau zudem eine dritte Schicht und eine vierte Schicht auf. Dabei kann die dritte Schicht zwischen der dielektrischen Schicht und der elektrisch leitfähigen Lage des Schirmschichtaufbaus angeordnet sein.

In weiterer Ausgestaltung der Erfindung weist das Abtastelement einen mehrlagigen Sensoraufbau auf, der einem Aufbau einer mehrlagigen Leiterplatte beziehungsweise Leiterfolie entspricht. Als Lage des Abtastelements ist hier also eine (strukturierte) Schicht zu verstehen. Der Sensoraufbau umfasst zumindest eine erste elektrisch leitfähige Lage und einen zweite elektrisch leitfähige Lage. Die Erregerspur und die Empfängerspur sind durch Strukturierung der elektrisch leitfähigen Lagen erzeugt worden. Folglich umfasst der Sensoraufbau strukturierte leitfähige Lagen in denen die zumindest eine Erregerspur und die zumindest eine Empfängerspur angeordnet sind. In weiterer Ausgestaltung der Erfindung weist der Sensoraufbau genau zwei elektrisch leitfähige Lagen auf, in denen die zumindest eine Erregerspur und die zumindest eine Empfängerspur verlaufen.

Mit Vorteil ist zwischen der zweiten elektrisch leitfähigen Lage und dem Schirmschichtaufbau eine Isolierschicht angeordnet. Zudem kann zwischen dieser Isolierschicht und der elektrisch leitfähigen Lage eine vierte Schicht angeordnet sein. Vorteilhafterweise ist die elektrisch leitfähige zweite Schicht des Schirmschichtaufbaus zwischen der dritten Schicht und der vierten Schicht angeordnet. Das Material der dritten Schicht und / oder das Material der vierten Schicht kann Chrom umfassen. Somit sind die dritte und die vierte Schicht aus einem Material, das eine vergleichsweise hohe elektrische Leitfähigkeit aufweist. Allerdings weisen die dritte Schicht und die vierte Schicht zusammen weniger als 50% der Dicke der elektrisch leitfähigen Lage auf.

Vorteilhafterweise weist die dielektrische erste Schicht des Schirmschichtaufbaus eine Dicke von mindestens 2,5 µm, insbesondere mindestens 5 µm, mit Vorteil mindestens 20 µm auf.

In weiterer Ausgestaltung der Erfindung umfasst das Abtastelement zumindest ein elektronisches Bauteil, wobei der Schirmschichtaufbau beziehungsweise die elektrisch leitfähige zweite Schicht zwischen dem Substrat und dem zumindest einen elektronischen Bauteil angeordnet ist. Demnach erstreckt sich also bei dieser Ausführungsform der Schirmschichtaufbau beziehungsweise die elektrisch leitfähige zweite Schicht auch unter den Bereich des zumindest einen elektronischen Bauteils.

Insbesondere ist das zumindest eine elektronische Bauteil so ausgestaltet, dass durch dieses von der Empfängerspur aufgenommenen Signale im Hinblick auf die darin enthaltenen Positionsinformationen auswertbar sind. Es sind also diejenigen Signale, die von der Empfängerspur erzeugbar sind, mit Hilfe des zumindest einen elektronischen Bauteils, das insbesondere eine Auswerteschaltung bildet, weiterverarbeitbar. Das Abtastelement kann mehrere elektronische Bauteile aufweisen, die elektrisch zu einer (Auswerte-) Schaltung verbunden sind. Die Verbindungen sind insbesondere als Leiterbahnen ausgestaltet, die in den entsprechend strukturierten ersten und zweiten Lagen verlaufen.

In vorteilhafter Ausgestaltung der Erfindung ist das zumindest eine elektronische Bauteil zur Generierung beziehungsweise Erzeugung eines Erregerstroms geeignet, welcher in die Erregerspur leitbar ist. Die Erregerspur ist also mit einem Erregerstrom bestrombar, welcher üblicherweise eine zeitlich wechselnde Stromstärke aufweist (Wechselstrom oder Mischstrom). Der Erregerstrom ist mit Hilfe des zumindest einen elektronischen Bauteils generierbar, das heißt, dass dessen Verlauf vom elektronischen Bauteil formbar ist. Nachdem ein physikalischer Zusammenhang zwischen der Stromstärke und der Spannungsstärke existiert, kann natürlich die gleiche Betrachtung auch für die Erregerspannung vorgenommen werden.

Das zumindest eine elektronische Bauteil kann auf derjenigen Seite des Abtastelements montiert sein, die dem Substrat gegenüber liegt, so dass dementsprechend der Sensoraufbau und das zumindest eine elektronische Bauteil bezogen auf das Substrat auf derselben Seite angeordnet sind.

Die elektronische Schaltung ist über eine Leitung an ein Ground-Potenzial anschließbar (electronic ground) und die zumindest eine elektrisch leitfähige zweite Schicht des Schirmschichtaufbaus ist mit dieser Leitung elektrisch verbunden. Diese Leitung kann einen ohmschen Widerstand und einen Kondensator aufweisen, wobei der ohmsche Widerstand und der Kondensator parallel geschaltet sind. Der Schirmschichtaufbau, insbesondere dessen leitfähige zweite Schicht ist vorteilhafterweise ohne Unterbrechungen flächig ausgebildet. Die elektrisch leitfähige zweite Schicht des Schirmschichtaufbaus ist vorteilhafterweise über ein Via mit der Leitung verbunden. Die zweite Schicht ist somit mit einem Anschlusselement elektrisch verbunden, welches bestimmungsgemäß als Anschluss für das Ground-Potenzial dient.

Als Anschlusselement kann beispielsweise ein Element eines Steckverbinders, also ein Steckerelement, oder eine Lötverbindung verstanden werden. Dagegen kann das Substrat beispielsweise an einem elektrisch leitfähigen Gehäuse, etwa ein Motorgehäuse, montiert sein, so dass das Substrat über das Motorgehäuse geerdet ist. Dabei sind das Substrat und die elektrisch leitfähige zweite Schicht des Schirmschichtaufbaus nicht unmittelbar miteinander elektrisch verbunden, insbesondere nicht miteinander geerdet.

Der Schirmschichtaufbau dient zur Abschirmung von Störfeldern, so dass keine Störungen in der Empfängerspur und / oder in der Erregerspur und gegebenenfalls in den elektronischen Bauteil auftreten. Gleichzeitig ist der Schirmschichtaufbau so ausgestaltet, dass durch diesen trotzdem Nutzsignale mit der erforderlichen Stärke empfangbar sind, so dass eine genaue Positionsbestimmung möglich ist.

Mit Vorteil weist das Substrat eine Dicke von mehr als 0,5 mm auf.

Gemäß einem weiteren Aspekt umfasst die Erfindung auch eine induktive Positionsmesseinrichtung mit dem Abtastelement sowie einem Skalenelement, wobei das Abtastelement dem Skalenelement gegenüber liegend und relativ zu diesem bewegbar angeordnet ist.

Die Verwendung einer Schirmschicht kann im Übrigen auch bei Abtastelementen, die nach einem optischen, kapazitiven oder magnetischen Prinzip arbeiten sinnvoll sein, insbesondere zur Abschirmung von Störfeldern auf elektronische Bauteile des Abtastelements.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

### KURZE BESCHREIBUNG DER ZEICHNUNGEN

- Figur 1: eine Draufsicht auf ein Abtastelement,
- Figur 2: eine Draufsicht auf ein Skalenelement,
- Figur 3: eine Teilschnitt-Ansicht des Abtastelements,
- Figur 4: ein Detail der Teilschnitt-Ansicht des Abtastelements.

### BESCHREIBUNG DER AUSFÜHRUNGSFORMEN

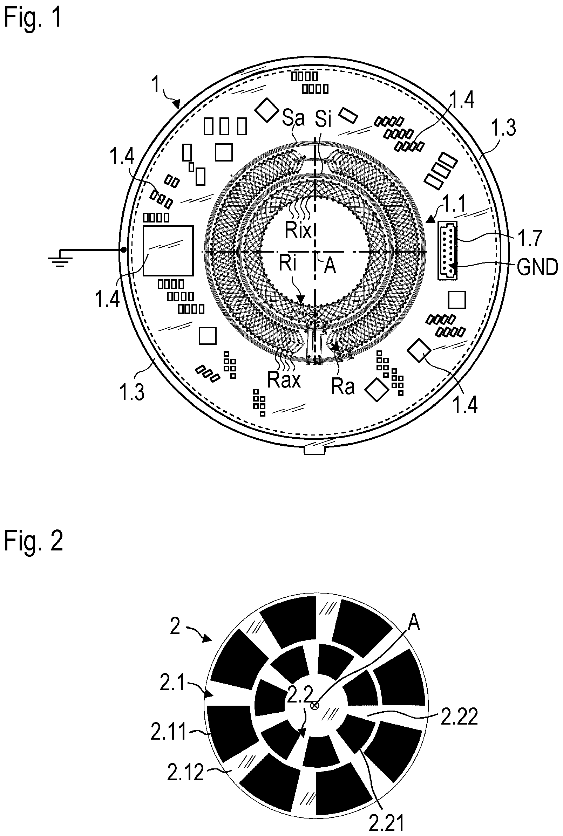

Die Erfindung wird anhand einer Positionsmesseinrichtung beschrieben, welche ein Abtastelement 1 gemäß der Figur 1 und ein Skalenelement 2 gemäß der Figur 2 aufweist. Im zusammengebauten Zustand der Positionsmesseinrichtung stehen sich das Abtastelement 1 und das Skalenelement 2 axial beabstandet gegenüber, wobei das Skalenelement 2 um eine Achse A relativ zum Abtastelement 1 drehbar angeordnet ist. Die Achse A ist in den Figuren 1 und 2 orthogonal zur Zeichenebene orientiert. Das Abtastelement 1 dient zur Abtastung des Skalenelements 2. Durch die Positionsmesseinrichtung kann also die Position in Umfangsrichtung, also eine Winkelposition oder Drehstellung des Skalenelements 2, bestimmt werden.

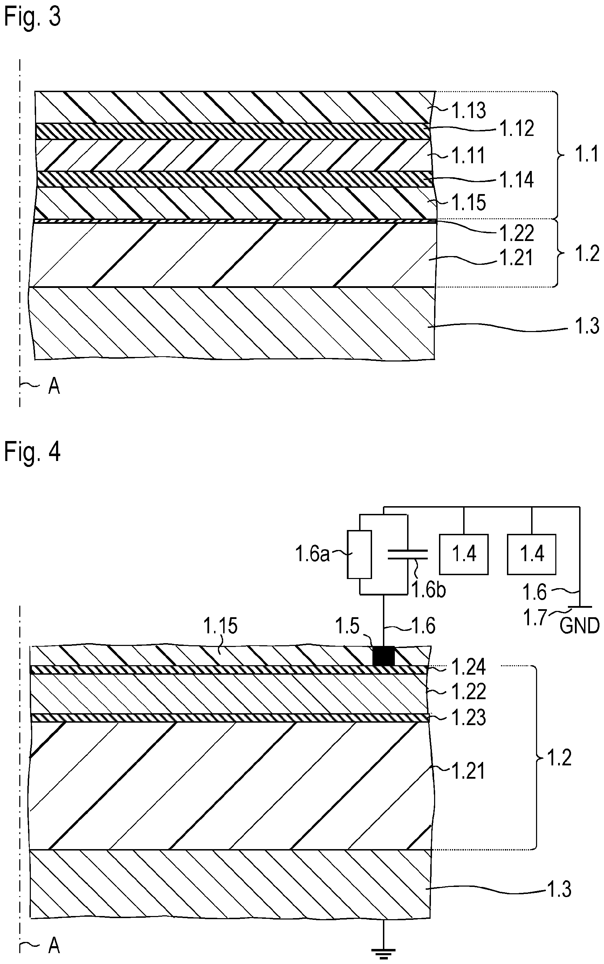

In der der Figur 3 ist ein Schnitt durch einen Teilbereich des Abtastelements 1 dargestellt. Demnach umfasst das Abtastelement 1 einen Sensoraufbau 1.1, welcher eine erste elektrisch leitfähige Lage 1.12 und eine zweite elektrisch leitfähige Lage 1.14 aufweist. Die erste elektrisch leitfähige Lage 1.12 und die zweite elektrisch leitfähige Lage 1.14 sind im vorgestellten Ausführungsbeispiel als etwa 12 µm dicke Kupferschichten ausgebildet. Zwischen der ersten elektrisch leitfähigen Lage 1.12 und der zweiten elektrisch leitfähigen Lage 1.14 ist eine erste Isolierschicht 1.11 angeordnet. Ebenso sind eine zweite Isolierschicht 1.13 und eine dritte Isolierschicht 1.15 auf den jeweils der ersten Isolierschicht 1.11 gegenüber liegenden Seiten der elektrisch leitfähigen Lagen 1.12, 1.14 angeordnet. Die Isolierschichten 1.11, 1.13, 1.15 sind im vorgestellten Ausführungsbeispiel jeweils aus Polyimid mit einer Dicke von circa 20 µm. Im vorgestellten Ausführungsbeispiel ist der Sensoraufbau 1.1 sehr dünn ausgestaltet und weist eine Dicke von etwa 100 µm auf, weshalb hier auch von einer mehrschichtigen Folie gesprochen werden kann, die im Prinzip einer mehrschichtigen (flexiblen) Leiterplatte entspricht.

Die erste elektrisch leitfähige Lage 1.12 und die zweite elektrisch leitfähige Lage 1.14 sind so strukturiert, dass gemäß der Figur 1 Erregerspuren Sa, Si und Empfängerspuren Ra, Ri vorliegen.

Beide Erregerspuren Sa, Si umfassen im vorgestellten Ausführungsbeispiel jeweils mehrere parallele Erregerleiterbahnen. Die Erregerleiterbahnen beziehungsweise die Erregerspuren Sa, Si umschließen die Empfängerspuren Ra, Ri und verlaufen entlang der Umfangsrichtung um die Achse A.

Jede der Empfängerspuren Ra, Ri umfasst im vorgestellten Ausführungsbeispiel jeweils vier Empfängerleiterbahnen Rax, Rix (siehe die Figur 1), die in Umfangsrichtung versetzt angeordnet sind, so dass diese dem Versatz entsprechend vier phasenverschobene Signale liefern können. Die Empfängerleiterbahnen Rax, Rix einer jeweiligen Empfängerspur Ra, Ri verlaufen mit Vias verbunden wechselweise in der ersten elektrisch leitfähigen Lage 1.12 und in der zweiten elektrisch leitfähigen Lage 1.14 des Sensoraufbaus 1.1, so dass an Kreuzungspunkten unerwünschte Kurzschlüsse vermieden werden. Die Empfängerleiterbahnen Rax, Rix weisen einen räumlich periodischen Verlauf auf, der im Wesentlichen sinusförmig beziehungsweise sinusartig ausgestaltet ist. Die Empfängerleiterbahnen Rix der inneren Empfängerspur Ri weisen eine andere Periodenlänge auf als die Empfängerleiterbahnen Rax der äußeren Empfängerspur Ra. Die Empfängerleiterbahnen Rax, Rix sind so versetzt und elektrisch so verschaltet, dass diese jeweils zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden.

Das Abtastelement 1 weist zudem eine elektronische Schaltung mit einer Vielzahl von elektronischen Bauteilen 1.4 auf, die in der Figur 1 nur schematisch dargestellt sind. Die elektronische Schaltung umfasst im vorgestellten Ausführungsbeispiel auch einen ASIC-Baustein.

Die von den Empfängerleiterbahnen Rax, Rix empfangenen Signale werden zur elektronischen Schaltung, insbesondere zu einem Bereich, der als Auswerteschaltung dient, geführt.

Zudem weist das Abtastelement 1 einen Anschlusselement 1.7 auf, welcher im vorgestellten Ausführungsbeispiel als ein Pin eines Steckverbinders ausgestaltet ist. Das Anschlusselement 1.7 beziehungsweise der Pin dient bestimmungsgemäß im Betrieb des Abtastelements 1 zum Anschluss an das Ground-Potenzial GND. Der Steckverbinder ist im Übrigen zur Ankopplung eines mehradrigen Ausgangskabels bestimmt und dient unter anderem zur Versorgung des Abtastelements mit elektrischer Energie und zur Übertragung von Signalen an eine Folgeelektronik.

Das Abtastelement 1 weist zur mechanischen Verstärkung ein vergleichsweise dickes Substrat 1.3 auf, das aus einem metallischen Werkstoff besteht, insbesondere kann das Substrat 1.3 aus einem weichmagnetischen Werkstoff hergestellt sein. Im vorgestellten Ausführungsbeispiel ist das Substrat 1.3 aus Stahl und weist ein Dicke von 1,5 mm auf.

Zwischen dem Substrat 1.3 und dem Sensoraufbau 1.1 ist gemäß der Figur 3 ein Schirmschichtaufbau 1.2 angeordnet. Dieser umfasst eine dielektrische, also elektrisch isolierende, erste Schicht 1.21 und eine elektrisch leitfähige zweite Schicht 1.22. Die dielektrische erste Schicht 1.21 ist auf dem Substrat 1.3 aufgebracht und ist im vorgestellten Ausführungsbeispiel eine Polyimidschicht mit einer Dicke von 30 µm. Gemäß der Figur 4 umfasst der Schirmschichtaufbau 1.2 zudem eine dritte Schicht 1.23 und eine vierte Schicht 1.24. Im Zuge der Herstellung des Abtastelements 1 wird das Substrat 1.3 mit der dielektrischen ersten Schicht 1.21 beschichtet. Danach wird die dritte Schicht 1.23 auf die erste Schicht 1.21 aufgebracht, wobei die dritte Schicht 1.23 aus Chrom ist und eine Dicke von nur 30 nm aufweist. Auf diese dritte Schicht 1.23 aus Chrom wird eine zweite Lage aus Kupfer mit einer Dicke von 200 nm aufgebracht, wobei diese die elektrisch leitfähige zweite Schicht 1.22 bildet. Auf diese zweite Schicht 1.22 wird dann die vierte Schicht 1.24 aufgebracht, die wiederum aus Chrom besteht und eine Dicke von 30 nm aufweist. Im vorgestellten Ausführungsbeispiel wurde die elektrisch leitfähige zweite Schicht 1.22 sowie die dritte und vierte Schicht 1.23, 1.24 durch eine physikalische Gasphasenabscheidung (PVD-Verfahren) aufgebracht. Insbesondere ist hier ein Sputter- beziehungsweise Kathodenzerstäubungs-Verfahren durchgeführt worden. Auf diesen Schirmschichtaufbau 1.2 wird dann die Isolierschicht 1.15 aufgebracht und nachfolgend die weiteren Komponenten des Sensoraufbaus 1.1. Schließlich erfolgt die Bestückung der elektronischen Bauteile 1.4.

Der Schirmschichtaufbau 1.2 ist über ein Via 1.5 mit einer elektrischen Leitung 1.6 verbunden. Diese umfasst im vorgestellten Ausführungsbeispiel einen ohmschen Widerstand 1.6a und einen dazu parallel geschalteten Kondensator 1.6b. Die elektronische Schaltung, welche die elektronischen Bauteile 1.4 umfasst, ist über die Leitung 1.6 mit dem Ground-Potenzial GND verbunden. Beispielsweise kann die Positionsmesseinrichtung über den am Abtastelement 1 montierten Steckverbinder 1.7 (Fig. 1) mit einer Folgeelektronik verbunden werden. Zu diesem Zweck kann an den Steckverbinder 1.7 ein Ausgangskabel angekoppelt werden, das zumindest eine Ader aufweist, die elektrisch mit einer außerhalb des Abtastelements 1 angeordneten Masse beziehungsweise Erde der Folgeelektronik verbunden ist.

Die elektrisch leitfähige zweite Schicht 1.22 ist also über die Leitung 1.6 mit dem Steckverbinder 1.7 beziehungsweise einem Pin des Steckverbinders 1.7, der bestimmungsgemäß das Ground-Potenzial GND aufweist, elektrisch verbunden, wobei das Ground-Potenzial GND im vorgestellten Ausführungsbeispiel 0 V beträgt. Durch den Kondensator 1.6b können einerseits hochfrequente Störsignale abgeführt werden, andererseits wird durch den parallelen Zweig mit dem ohmschen Widerstand 1.6a sichergestellt, dass Ladungen abfließen können. Somit wird Störenergie über die Leitung 1.6 (im vorgestellten Ausführungsbeispiel zudem über den Steckverbinder 1.7 und das Anschlusskabel) abgeführt.

Die dritte Schicht 1.23 und die vierte Schicht 1.24 dienen als Haftvermittler beziehungsweise als Sauerstoffbarriere. Insbesondere wird durch die vierte Schicht 1.24 verhindert, dass Sauerstoff über die Isolierschicht 1.15 zur elektrisch leitfähigen Schicht 1.22 vordringt. Dieser würde mit dem Material der elektrisch leitfähigen Schicht 1.22, hier Kupfer, reagieren. Zudem würde diese Reaktion zu einer Minimierung der Haftungseigenschaften zwischen der zweiten Schicht 1.22 und der dritten Schicht 1.23 und vor allem zwischen der zweiten Schicht 1.22 und der vierten Schicht 1.24 führen. Insbesondere durch die genannten Effekte würde die abschirmende Funktion beeinträchtigt werden.

Die elektrisch leitfähige zweite Schicht 1.22 wird mit Hilfe eines Ätzverfahrens so strukturiert, dass der Rand der zweiten Schicht 1.22 bezüglich des Randes des Substrats 1.3 zurückversetzt ist (siehe Figur 1). Die elektrisch leitfähige zweite Schicht 1.22 erstreckt sich vollflächig zwischen dem Substrat 1.3 und den Erregerspuren Sa, Si, den Empfängerspuren Ri, Ra sowie den elektronischen Bauteilen 1.4 der elektronischen Schaltung. Wenngleich im vorgestellten Ausführungsbeispiel die dritte Schicht 1.23 und die vierte Schicht 1.24 aus elektrisch leitfähigem Chrom hergestellt sind, wird der wesentliche Anteil der Schirmwirkung durch die zweite Schicht 1.22 aus Kupfer erzielt. Dies liegt zum einen an der höheren elektrischen Leitfähigkeit von Kupfer im Vergleich zu Chrom, aber vor allem an der weitaus größeren Dicke (200 nm) der zweiten Schicht 1.22 im Vergleich zur Dicke der dritten Schicht 1.23 und der vierten Schicht 1.24 (jeweils 30 nm).

Das Abtastelement 1 ist so ausgestaltet, dass die elektrisch leitfähige zweite Schicht 1.22 elektrisch isoliert zum Substrat 1.3 angeordnet ist, also die zweite Schicht 1.22 nicht mit dem Substrat 1.3 elektrisch verbunden ist.

In der Figur 2 ist das Skalenelement 2, das eine scheibenförmige Gestalt aufweist, in einer Draufsicht gezeigt. Das Skalenelement 2 besteht aus einem Träger, welcher im dargestellten Ausführungsbeispiel aus Epoxidharz hergestellt ist, und auf welchem zwei Teilungsspuren 2.1, 2.2 angeordnet sind. Die Teilungsspuren 2.1, 2.2 sind ringförmig ausgebildet und bezüglich der Achse A konzentrisch mit unterschiedlichem Durchmesser auf dem Träger angeordnet. Die Teilungsspuren 2.1, 2.2 umfassen Teilungsstrukturen bestehend aus jeweils einer periodischen Abfolge von alternierend angeordneten elektrisch leitfähigen Teilungsbereichen 2.11, 2.21 und nichtleitfähigen Teilungsbereichen 2.12, 2.22. Als Material für die elektrisch leitfähigen Teilungsbereiche 2.11, 2.21 wurde im gezeigten Beispiel Kupfer auf dem Träger aufgebracht.

In den nichtleitfähigen Teilungsbereichen 2.12, 2.22 wurde der Träger dagegen nicht beschichtet. Durch die Anordnung mit zwei Teilungsspuren 2.1, 2.2 kann die Winkelposition des Skalenelements 2 jeweils absolut bestimmt werden. Die äußerste Teilungsspur 2.1 des Skalenelements 2 weist die größere Anzahl von Teilungsbereichen 2.11, 2.12 entlang einer Umfangslinie auf, so dass durch diese eine höhere Auflösung bezüglich der Messung der Winkelposition erzielbar ist.

Im zusammengebauten Zustand stehen sich das Abtastelement 1 und das Skalenelement 2 mit axialem Abstand (bezogen auf die Achse A) beziehungsweise mit axialem Luftspalt gegenüber, so dass bei einer Relativdrehung zwischen dem Skalenelement 2 und dem Abtastelement 1 in den Leiterbahnen der Empfängerspuren Ra, Ri jeweils ein von der jeweiligen Winkelposition abhängiges Signal durch Induktionseffekte erzeugbar ist. Voraussetzung für die Bildung von entsprechenden Signalen ist, dass die Erregerspuren Sa, Si ein zeitlich wechselndes elektromagnetisches Erregerfeld im Bereich der jeweilig abgetasteten Teilungsstrukturen erzeugen. Im dargestellten Ausführungsbeispiel sind die Erregerspuren Sa, Si als mehrere planar-parallele stromdurchflossene Einzel-Leiterbahnen ausgebildet. Die elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerspuren Sa, Si fließt. Somit werden die Erregerspuren Sa, Si durch ein und dasselbe Erregerkontrollelement bestromt.

Werden die Erregerspuren Sa, Si bestromt, so bildet sich um diese ein schlauch- bzw. zylinderförmig orientiertes elektromagnetisches Feld aus. Die Feldlinien des resultierenden elektromagnetischen Feldes verlaufen um die Erregerspuren Sa, Si, wobei die Richtung der Feldlinien in bekannter Art und Weise von der Stromrichtung in den Erregerspuren Sa, Si abhängt. Im Bereich der leitfähigen Teilbereiche 2.11, 2.21 werden Wirbelströme induziert, so dass jeweils eine von der Winkelposition abhängige Modulation des Feldes erreicht wird. Entsprechend kann durch die Empfängerspuren Ra, Ri jeweils die relative Winkelposition gemessen werden. Die Empfängerleiterbahnen sind innerhalb ihrer Empfängerspur Ra, Ri so angeordnet, dass diese jeweils um 90° phasenversetzte Signale liefern, so dass auch eine Bestimmung der Drehrichtung vorgenommen werden kann. Die Signale, die von den Empfängerspuren Ra, Ri erzeugt werden, werden durch eine Auswerteschaltung weiterverarbeitet.

Obwohl das Substrat 1.3 aus einem metallischen Werkstoff besteht, das im Betrieb der Positionsmesseinrichtung bestimmungsgemäß mit dem Erdpotenzial elektrisch verbunden ist (siehe Figur 1), zum Beispiel durch Kontakt mit einem geerdeten Metallgehäuse, konnte durch den zusätzlichen Schirmschichtaufbau 1.2 eine signifikante Verbesserung der Messsignale erreicht werden. Dabei ist es wichtig, dass durch den Schirmschichtaufbau 1.2 einerseits eine gute Abschirmwirkung gegenüber Störfeldern erzielt wird, andererseits darf der Schirmschichtaufbau 1.2 aber die Nutzsignale der induktiven Positionsmesseinrichtung nicht maßgeblich dämpfen. Durch das erfindungsgemäße Abtastelement 1 können Positionssignale hoher Qualität erzeugt werden. Der Schirmschichtaufbau 1.2 insbesondere die elektrisch leitfähige zweite Schicht 1.22 ist mit dem Ground-Potenzial GND der Schaltung des Abtastelements 1 elektrisch verbunden und ist nicht mit dem im Betrieb geerdeten Substrat 1.3 elektrisch verbunden, sondern durch die erste Schicht 1.21 von diesem elektrisch isoliert und beabstandet.

## Patentansprüche

1. Abtastelement (1) für eine induktive Positionsmesseinrichtung, das
¬ eine Erregerspur (Sa, Si) und eine Empfängerspur (Ri, Ra) umfasst,
¬ ein Substrat (1.3) aus einem metallischen Werkstoff aufweist, und
¬ einen Schirmschichtaufbau (1.2) umfasst, der zumindest eine
- erste Schicht (1.21), die eine dielektrische Eigenschaft aufweist und
- eine zweite Schicht (1.22), die elektrisch leitfähig ist, umfasst, wobei
der Schirmschichtaufbau (1.2)
zwischen dem Substrat (1.3) und der Empfängerspur (Ri, Ra) und / oder
zwischen dem Substrat (1.3) und der Erregerspur (Sa, Si) angeordnet ist, wobei
das Abtastelement (1) zumindest ein elektronisches Bauteil (1.4) umfasst, das einer elektronischen Schaltung zugeordnet ist, wobei die Schaltung mit einem Anschlusselement (1.7) elektrisch verbunden ist, welches bestimmungsgemäß als Anschluss für das Ground-Potenzial (GND) dient, wobei die zweite Schicht (1.22) mit dem Anschlusselement (1.7) elektrisch verbunden ist und nicht mit dem Substrat (1.3) elektrisch verbunden ist.

2. Abtastelement (1) gemäß dem Anspruch 1, wobei die erste Schicht (1.21) eine Dicke von weniger als 1 mm aufweist.

3. Abtastelement (1) gemäß einem der vorhergehenden Ansprüche, wobei die zweite Schicht (1.22) des Schirmschichtaufbaus (1.2) durch eine physikalische Gasphasenabscheidung aufgebracht ist.

4. Abtastelement (1) gemäß einem der vorhergehenden Ansprüche, wobei der Schirmschichtaufbau (1.2) eine dritte Schicht (1.23) aufweist, die zwischen der dielektrischen ersten Schicht (1.21) und der elektrisch leitfähigen zweiten Schicht (1.22) angeordnet ist.

5. Abtastelement (1) gemäß einem der vorhergehenden Ansprüche, wobei das Abtastelement (1) einen mehrlagigen Sensoraufbau (1.1) aufweist, der eine erste elektrisch leitfähige Lage (1.12) und eine zweite elektrisch leitfähigen Lage (1.14) umfasst, wobei die zumindest eine Erregerspur (Sa, Si) und die zumindest eine Empfängerspur (Ri, Ra) durch Strukturierung der elektrisch leitfähigen Lagen (1.12) erzeugt sind.

6. Abtastelement (1) gemäß dem Anspruch 5, wobei zwischen der zweiten elektrisch leitfähigen Lage (1.14) und dem Schirmschichtaufbau (1.2) eine Isolierschicht (1.15) angeordnet ist, wobei zwischen der Isolierschicht (1.15) und der zweiten Schicht (1.22) eine vierte Schicht (1.24) angeordnet ist.

7. Abtastelement (1) gemäß einem der vorhergehenden Ansprüche, wobei der Schirmschichtaufbau (1.2) eine dritte Schicht (1.23) und eine vierte Schicht (1.24) aufweist, wobei die zweite Schicht (1.22) des Schirmschichtaufbaus (1.2) zwischen der dritten Schicht (1.23) und der vierten Schicht (1.24) angeordnet ist.

8. Abtastelement (1) gemäß einem der vorhergehenden Ansprüche, wobei der Schirmschichtaufbau (1.2) eine dritte Schicht (1.23) und / oder eine vierte Schicht (1.24) aufweist, wobei die zweite Schicht (1.22) des Schirmschichtaufbaus (1.2) an die dritten Schicht (1.23) und / und oder die vierte Schicht (1.24) angrenzt, wobei das Material der dritten Schicht (1.23) und / oder der vierten Schicht (1.24) Chrom umfasst.

9. Abtastelement (1) gemäß einem der vorhergehenden Ansprüche, wobei die erste Schicht (1.21) des Schichtaufbaus (1.2) eine Dicke von mindestens 2,5 µm aufweist.

10. Abtastelement (1) gemäß einem der vorhergehenden Ansprüche, wobei das Abtastelement (1) zumindest ein elektronisches Bauteil (1.4) umfasst und der Schirmschichtaufbau (1.2) zwischen dem Substrat (1.3) und dem zumindest einen elektronischen Bauteil (1.4) angeordnet ist.

11. Abtastelement (1) gemäß dem Anspruch 10, wobei das zumindest eine elektronischen Bauteil (1.4) zur Auswertung der von der Empfängerspur (Ri, Ra) aufgenommen Signale dient.

12. Abtastelement (1) gemäß dem Anspruch 10 oder 11, wobei das zumindest eine elektronische Bauteil (1.4) zur Generierung eines Erregerstroms dient, welcher in die Erregerspur (Sa, Si) leitbar ist.

13. Abtastelement (1) gemäß einem der vorhergehenden Ansprüche, wobei die zweite Schicht (1.22) über eine Leitung (1.6) mit dem Anschlusselement (1.7) elektrisch verbunden ist, wobei in der Leitung (1.6) ein ohmscher Widerstand (1.6a) und ein Kondensator (1.6b) parallel geschaltet sind.

14. Induktive Positionsmesseinrichtung umfassend ein Abtastelement (1) gemäß einem der vorhergehenden Ansprüche sowie ein Skalenelement (2), wobei das Abtastelement (1) dem Skalenelement (2) gegenüber liegend und relativ zu diesem bewegbar angeordnet ist.

## Claims

1. Scanning element (1) for an inductive position measuring device, the scanning element
¬ comprising an excitation track (Sa, Si) and a receiver track (Ri, Ra),
¬ having a substrate (1.3) composed of a metallic material, and
¬ comprising a shielding layer structure (1.2) comprising at least a
- first layer (1.21) having a dielectric property, and
- a second layer (1.22), which is electrically conductive, wherein
the shielding layer structure (1.2) is arranged between the substrate (1.3) and the receiver track (Ri, Ra) and/or
between the substrate (1.3) and the excitation track (Sa, Si), wherein
the scanning element (1) comprises at least one electronic component (1.4) assigned to an electronic circuit, wherein the circuit is electrically connected to a connection element (1.7) serving as intended as a connection for the ground potential (GND), wherein the second layer (1.22) is electrically connected to the connection element (1.7) and is not electrically connected to the substrate (1.3).

2. Scanning element (1) according to Claim 1, wherein the first layer (1.21) has a thickness of less than 1 mm.

3. Scanning element (1) according to either of the preceding claims, wherein the second layer (1.22) of the shielding layer structure (1.2) is applied by physical vapour deposition.

4. Scanning element (1) according to any of the preceding claims, wherein the shielding layer structure (1.2) has a third layer (1.23) arranged between the dielectric first layer (1.21) and the electrically conductive second layer (1.22).

5. Scanning element (1) according to any of the preceding claims, wherein the scanning element (1) has a multilayer sensor structure (1.1) comprising a first electrically conductive layer (1.12) and a second electrically conductive layer (1.14), wherein the at least one excitation track (Sa, Si) and the at least one receiver track (Ri, Ra) are produced by structuring of the electrically conductive layers (1.12).

6. Scanning element (1) according to Claim 5, wherein an insulating layer (1.15) is arranged between the second electrically conductive layer (1.14) and the shielding layer structure (1.2), wherein a fourth layer (1.24) is arranged between the insulating layer (1.15) and the second layer (1.22).

7. Scanning element (1) according to any of the preceding claims, wherein the shielding layer structure (1.2) has a third layer (1.23) and a fourth layer (1.24), wherein the second layer (1.22) of the shielding layer structure (1.2) is arranged between the third layer (1.23) and the fourth layer (1.24).

8. Scanning element (1) according to any of the preceding claims, wherein the shielding layer structure (1.2) has a third layer (1.23) and/or a fourth layer (1.24), wherein the second layer (1.22) of the shielding layer structure (1.2) adjoins the third layer (1.23) and/or the fourth layer (1.24), wherein the material of the third layer (1.23) and/or of the fourth layer (1.24) comprises chromium.

9. Scanning element (1) according to any of the preceding claims, wherein the first layer (1.21) of the layer structure (1.2) has a thickness of at least 2.5 pm.

10. Scanning element (1) according to any of the preceding claims, wherein the scanning element (1) comprises at least one electronic component (1.4) and the shielding layer structure (1.2) is arranged between the substrate (1.3) and the at least one electronic component (1.4) .

11. Scanning element (1) according to Claim 10, wherein the at least one electronic component (1.4) serves for evaluating the signals picked up by the receiver track (Ri, Ra).

12. Scanning element (1) according to Claim 10 or 11, wherein the at least one electronic component (1.4) serves for generating an excitation current which is conductible into the excitation track (Sa, Si).

13. Scanning element (1) according to any of the preceding claims, wherein the second layer (1.22) is electrically connected to the connection element (1.7) via a line (1.6), wherein an ohmic resistor (1.6a) and a capacitor (1.6b) are connected in parallel in the line (1.6) .

14. Inductive position measuring device comprising a scanning element (1) according to any of the preceding claims and also a scale element (2), wherein the scanning element (1) is arranged opposite the scale element (2) and movably relative to the latter.

## Revendications

1. Élément de balayage (1) destiné à un dispositif de mesure de position inductif, lequel
- comprend une piste d'excitation (Sa, Si) et une piste de réception (Ri, Ra),
- comporte un substrat (1.3) constitué d'un matériau métallique, et
- comprend une structure de couche de blindage (1.2) comprenant au moins
- une première couche (1.21) qui présente une propriété diélectrique et
- une deuxième couche (1.22) qui est électriquement conductrice, dans lequel
la structure de couche de blindage (1.2) est disposée entre le substrat (1.3) et la piste de réception (Ri, Ra) et/ou
entre le substrat (1.3) et la piste d'excitation (Sa, Si), dans lequel
l'élément de balayage (1) comprend au moins un composant électronique (1.4) qui est associé à un circuit électronique, le circuit étant relié électriquement à un élément de connexion (1.7) qui, conformément à sa destination, sert de connexion pour le potentiel de masse (GND), la deuxième couche (1.22) étant reliée électriquement à l'élément de connexion (1.7) et n'étant pas reliée électriquement au substrat (1.3).

2. Élément de balayage (1) selon la revendication 1, dans lequel la première couche (1.21) présente une épaisseur inférieure à 1 mm.

3. Élément de balayage (1) selon l'une des revendications précédentes, dans lequel la deuxième couche (1.22) de la structure de couche de blindage (1.2) est appliquée par un dépôt physique en phase vapeur.

4. Élément de balayage (1) selon l'une des revendications précédentes, dans lequel la structure de couche de blindage (1.2) comprend une troisième couche (1.23) qui est disposée entre la première couche diélectrique (1.21) et la deuxième couche électriquement conductrice (1.22).

5. Élément de balayage (1) selon l'une des revendications précédentes, dans lequel l'élément de balayage (1) présente une structure de capteur multicouche (1.1) qui comprend une première couche électriquement conductrice (1.12) et une deuxième couche électriquement conductrice (1.14), l'au moins une piste d'excitation (Sa, Si) et l'au moins une piste de réception (Ri, Ra) étant produites par structuration des couches électriquement conductrices (1.12).

6. Élément de balayage (1) selon la revendication 5, dans lequel une couche isolante (1.15) est disposée entre la deuxième couche électriquement conductrice (1.14) et la structure de couche de blindage (1.2), une quatrième couche (1.24) étant disposée entre la couche isolante (1.15) et la deuxième couche (1.22).

7. Élément de balayage (1) selon l'une des revendications précédentes, dans lequel la structure de couche de blindage (1.2) comporte une troisième couche (1.23) et une quatrième couche (1.24), la deuxième couche (1.22) de la structure de couche de blindage (1.2) étant disposée entre la troisième couche (1.23) et la quatrième couche (1.24).

8. Élément de balayage (1) selon l'une des revendications précédentes, dans lequel la structure de couche de blindage (1.2) comporte une troisième couche (1.23) et/ou une quatrième couche (1.24), la deuxième couche (1.22) de la structure de couche de blindage (1.2) étant adjacente à la troisième couche (1.23) et/ou à la quatrième couche (1.24), le matériau de la troisième couche (1.23) et/ou de la quatrième couche (1.24)
comprenant du chrome.

9. Élément de balayage (1) selon l'une des revendications précédentes, dans lequel la première couche (1.21) de la structure de couche (1.2) présente une épaisseur d'au moins 2,5 pm.

10. Élément de balayage (1) selon l'une des revendications précédentes, dans lequel l'élément de balayage (1) comprend au moins un composant électronique (1.4) et la structure de couche de blindage (1.2) est disposée entre le substrat (1.3) et l'au moins un composant électronique (1.4).

11. Élément de balayage (1) selon la revendication 10, dans lequel l'au moins un composant électronique (1.4) sert à évaluer les signaux acquis par la piste de réception (Ri, Ra).

12. Élément de balayage (1) selon la revendication 10 ou 11, dans lequel l'au moins un composant électronique (1.4) sert à générer un courant d'excitation qui peut passer dans la piste d'excitation (Sa, Si).

13. Élément de balayage (1) selon l'une des revendications précédentes, dans lequel la deuxième couche (1.22) est reliée électriquement à l'élément de connexion (1.7) par une ligne (1.6), une résistance ohmique (1.6a) et un condensateur (1.6b) étant montés en parallèle dans la ligne (1.6).

14. Dispositif de mesure de position inductif comprenant un élément de balayage (1) selon l'une des revendications précédentes ainsi qu'un élément gradué (2), l'élément de balayage (1) étant disposé en face de l'élément gradué (2) et mobile par rapport à celui-ci.
